# EUROPEAN PATENT SPECIFICATION

(11) **EP 3 548 252 B1**
(45) Date of publication and mention of the grant of the patent: **18.05.2022**
(21) Application number: 17811408.8
(22) Date of filing: 13.11.2017
(51) Int. Cl.: B29C 48/34, B29C 48/154, B29C 48/06, B29C 48/25

(54) **MICROCAPILLARY WIRE COATING DIE ASSEMBLY**
MIKROKAPILLARE DRAHTBESCHICHTUNGSDÜSENMONTAGE
ENSEMBLE FILIÈRE POUR REVÊTEMENT DE CÂBLE MICROCAPILLAIRE

(30) Priority: 29.11.2016 US 201662427358 P
(43) Date of publication of application: 09.10.2019
(73) Proprietor: Dow Global Technologies LLC, Midland, MI 48674 (US)
(72) Inventor: HUANG, Wenyi, Midland MI 48674 (US); ESSEGHIR, Mohamed, Collegeville PA 19426 (US); KALEYTA, Scott, R., Midland MI 48667 (US); KMIEC, Chester, Phillipsburg, NJ 08865 (US); WRISLEY, Robert, E., Midland MI 48667 (US)
(74) Representative: Boult Wade Tennant LLP
(86) International application number: PCT/US2017/061269
(87) International publication number: WO 2018/102109

(56) References cited:
- EP-A1- 0 190 522
- JP-A- 2007 335 393
- JP-A- 2013 141 779
- US-A- 3 581 343
- US-A- 3 697 209
- US-A- 4 248 824
- US-A1- 2013 068 101
- US-B1- 8 827 676

## Description

### FIELD OF THE INVENTION

This invention relates to a microcapillary wire coating die assembly for the production of electrical and telecommunication cable jackets with microcapillary structures.

### BACKGROUND OF THE INVENTION

Electrical and telecommunication cables are made of tough, polymeric materials designed for years of defect-free service and, accordingly, cable jackets are typically difficult to tear and require special cutting tools and trained installers for safe installation without damaging the cable. As such, there is a strong end-user need for ease of installation and "easy-peel" jackets for ready access to internal components, and easy connection of fiber optic cables, with the overall objective to reduce total system cost.

To this end, cable jackets with tear features have been developed. These structures provide easy peeling of the cable jacket so as to provide access to the cable internal components and easy connections between fiber optic cables. Products comprising tear features, and processes for making these products, are well known in the art. See, for example, WO 2012/071490 A2, US 2013/0230287 A1, USP 7,197,215, USP 8,582,940, USP 8,682,124, USP 8,909,014, USP 8,995,809, US 2015/0049993 A1, CN 103 665 627 A, and CN 201 698 067.

One tear feature of particular interest are microcapillaries. These structures are small diameter channels formed in the wall of the cable jacket at the time of its formation and that extend along the longitudinal axis of the cable jacket. Here too, the art is replete with disclosures regarding the nature and formation of microcapillaries. See, for example, WO 2015/175208 A1, WO 2014/003761 A1, EP 1 691 964 B1, WO 2005/056272 A2, WO 2008/044122 A2, US 2009/0011182 A1, WO 2011/025698 A1, WO 2012/094315 A1, WO 2013/009538 A2, and WO 2012/094317 A1.

In the production of annular microcapillary products, typically the product, e.g., a cable jacket, has multiple layers two of which form around a microcapillary. Such products can be difficult to make due to the typically small, compact area of the die from which the product is formed. This, in turn, requires the use of a larger diameter die which adds to the capital and operating costs of the equipment. Of interest to the cable jacket industry is a die that will allow for the extrusion of a cable jacket comprising a single polymeric layer with embedded microcapillaries.

US 3 697 209 A discloses the manufacturing of tubings from rubber or other plastic materials comprising the steps of extruding a first inner layer of the tubing wall in an extruder head over a guide serving to form the cavity of the tubing, applying strand-like material through feed passages onto the outer surface of the wall part forming in such way and still in plastic state and then coating this inner wall part by at least one further layer of a plastic substance, to thereby provide tubings containing a lining in the wall material.

EP 0 190 522 A1 discloses a composite material constituted by a thermoplastic sheath and a core chosen from compounds of which the melting point, or in default of this the decomposition temperature, is below the melting point of the sheath, characterized in that the core is at least partially in the form of a powder.

JP 2013 141779 A discloses a method for manufacturing an extrusion molded article with a process in which fluid supply tubes (gas supply tubes, for example) arranged in a cantilevered manner in a material flow passage are supported by a support member.

US 2013/068101 A1 discloses sorbent substrates for CO2 capture and methods for forming the same.

US 4 248 824 A discloses a method and apparatus for producing extruded polymer products with a plurality of longitudinal stripes in the exterior surface thereof, and producing coated cable with color-coded stripes in the exterior surface thereof that are used for identification purposes.

US 3 581 343 A discloses a guide structure positioned within the guide tube of a tubing die extrusion coating apparatus for extrusion coating elongate material with thermoplastic resin, with the guide structure dividing the interior of the guide tube into a guide passage for material passing through the guide tube and a vacuum chamber annularly surrounding the guide passage, with the guide passage terminating in laterally spaced relationship within the outlet of the guide tube, whereby the space between the guide passage and the outlet of the guide tube insures communication of the vacuum within the vacuum chamber of the guide tube with tubing of thermoplastic resin extruded by the apparatus.

### SUMMARY OF THE INVENTION

In one embodiment the invention is mandrel assembly comprising:
(A) a housing comprising:
   (1) a housing wire tubular channel extending along (a) the length of the housing, and (b) the longitudinal centerline axis of the housing;
   (2) a fluid annular channel encircling the wire tubular channel;
   (3) a fluid ring in fluid communication with the fluid annular channel, the fluid ring positioned at one end of the housing; and
(B) a cone-shaped tip having a wide end and a narrow end, the wide end of the tip attached to the end of the housing at which the fluid ring is positioned, the tip comprising:
   (1) a tip wire tubular channel extending along (a) the length of the tip, and (b) the longitudinal centerline axis of the tip;
   (2) a tip fluid channel in fluid communication with the fluid ring; and
   (3) one or more nozzles in fluid communication with the tip fluid channel, the nozzles located at the end and extending beyond the narrow end of the tip;
the housing wire tubular channel and the tip wire tubular channel in open communication with one another such that a wire can pass from one to the other in a straight line and without interruption.

In one embodiment the invention is a die assembly for applying a polymeric coating comprising microcapillaries to a wire or optic fiber, the assembly comprising the mandrel assembly described above.

In one embodiment the invention is wire coating apparatus for applying a polymeric coating comprising microcapillary structures to a wire or optic fiber, the apparatus comprising the die assembly described above.

In one embodiment the invention is a wire or optic fiber comprising a polymeric coating comprising microcapillary structure, the polymeric coating applied to the wire or optic fiber using the apparatus described above.

### BRIEF DESCRIPTION OF THE DRAWINGS

Figure 1A is a perspective view of a die assembly for extruding a cable jacket.
Figure 1B is a sectional view of the die assembly of Figure 1A.
Figure 1C is an exploded view of the die assembly of Figures 1A and 1B.
Figure 2A is a perspective view of a microcapillary mandrel assembly.
Figure 2B is a sectional view of the microcapillary mandrel assembly of Figure 2A.
Figure 2C is an exploded view of the microcapillary mandrel assembly of Figures 2A and 2B.
Figures 3A-3D are schematic views of the placement of microcapillary channels in the wall of a cable jacket.
Figure 4 is a micrograph of a wire jacket with two microcapillary channels prepared with air as described in the Example.
Figure 5 is a micrograph of a wire jacket without microcapillary channels prepared without air as described in the Example.
Figures 6A and 6B are photographs of inventive and comparative, respectively, coated wire tear samples from the Example.

### DETAILED DESCRIPTION OF THE PREFERRED EMBODIMENT

The numerical ranges disclosed herein include all values from, and including, the lower and upper value. For ranges containing explicit values (e.g., 1 or 2; or 3 to 5; or 6; or 7), any subrange between any two explicit values is included (e.g., 1 to 2; 2 to 6; 5 to 7; 3 to 7; 5 to 6; etc.).

The terms "*comprising*," "*including*," "*having*," and their derivatives, are not intended to exclude the presence of any additional component, step or procedure, whether or not the same is specifically disclosed. In order to avoid any doubt, all compositions claimed through use of the term "*comprising*" may include any additional additive, adjuvant, or compound, whether polymeric or otherwise, unless stated to the contrary. In contrast, the term, "*consisting* essentially of" excludes from the scope of any succeeding recitation any other component, step, or procedure, excepting those that are not essential to operability. The term "consisting of" excludes any component, step, or procedure not specifically delineated or listed. The term "or," unless stated otherwise, refers to the listed members individually as well as in any combination. Use of the singular includes use of the plural and vice versa.

"Hybrid cable" and similar terms means a cable that contains two or more types of dissimilar transmission media within a single cable construction. Hybrid cables include, but are not limited to, cables containing a metallic wire such as copper twisted pairs and one or more optic fibers, or an optical fiber and a coaxial transmission construction.

"Cable", "power cable" and like terms mean at least one wire or optical fiber within a sheath (e.g., an insulation covering and/or a protective outer jacket). Typically, a cable is two or more wires or optical fibers bound together, typically in a common insulation covering and/or protective jacket. The individual wires or fibers inside the sheath may be bare, covered or insulated. The cable can be designed for low, medium, and/or high voltage applications. Typical cable designs are illustrated in USP 5,246,783; 6,496,629 and 6,714,707.

"Conductor" denotes one or more wire(s) or fiber(s) for conducting heat, light, and/or electricity. The conductor may be a single-wire/fiber or a multi-wire/fiber and may be in strand form or in tubular form. Nonlimiting examples of suitable conductors include metals such as silver, gold, copper, carbon, and aluminum. The conductor may also be optical fiber made from either glass or plastic.

Unless stated to the contrary, implicit from the context, or customary in the art, all parts and percents are based on weight and all test methods are current as of the filing date of this disclosure.

"In fluid communication" and like terms means that adjoining devices are connected in a manner such that a fluid can pass from one to the other without interruption.

"In open communication" and like terms means that adjoining devices are connected in a manner such that an object can pass from one to the other without interruption.

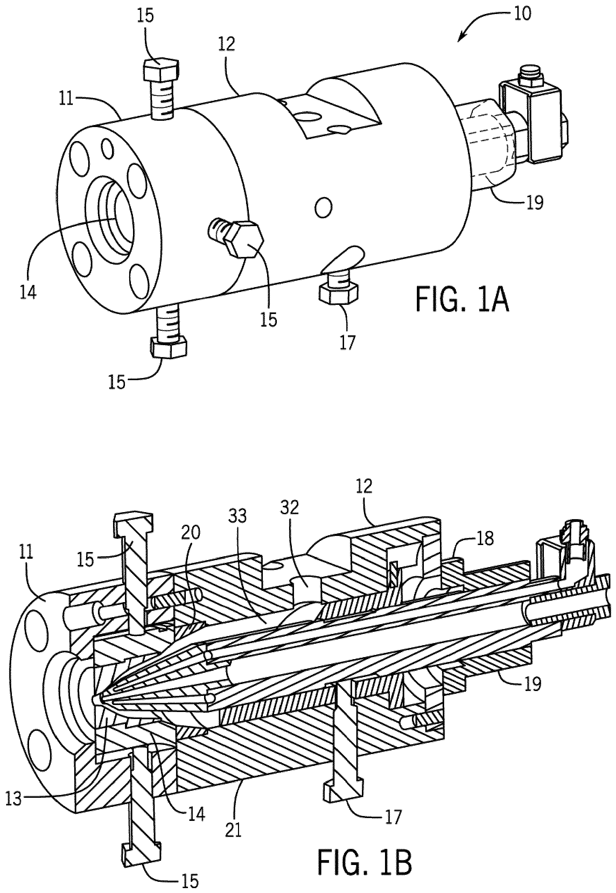

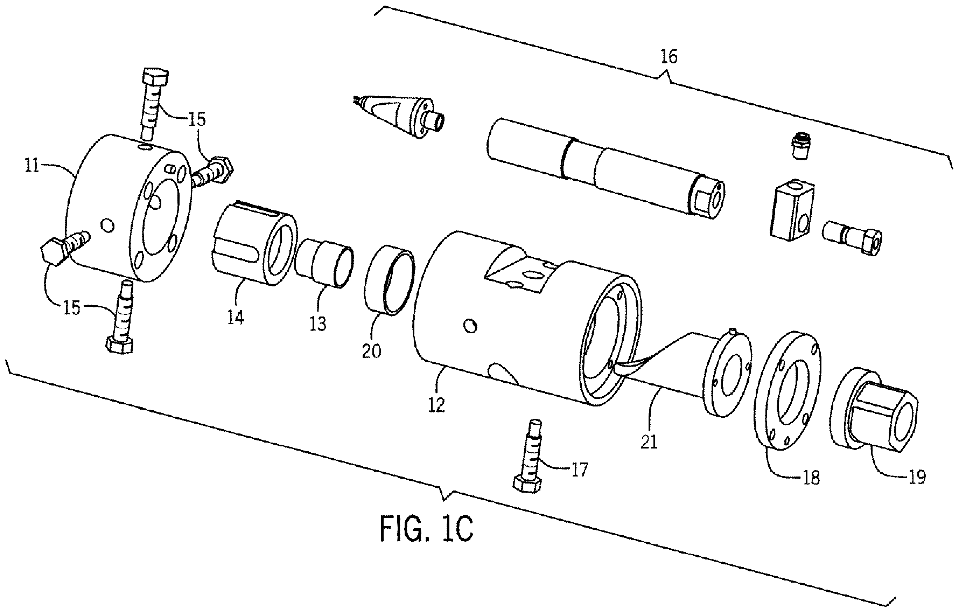

Figures 1A-1C illustrate a typical microcapillary wire coating apparatus. Wire coating apparatus 10 comprises end cap 11 securely attached to one end of housing 12. Fitted within end cap 11 is die 13 held in place by die retainer 14 and die retainer retaining screws 15, which are used for adjusting the wire jacket thickness uniformity and centricity.

Microcapillary mandrel assembly 16 is fitted within and extends through housing 12. Microcapillary mandrel assembly 16 is fitted within housing 12 by means of mandrel retaining screw 17, mandrel retainer 18, and adjustment screw 19. Fitted about microcapillary mandrel assembly 16 within housing 12 is resin flow deflector 20. Spacer 21 maintains the desired distance between die 13 and housing 12.

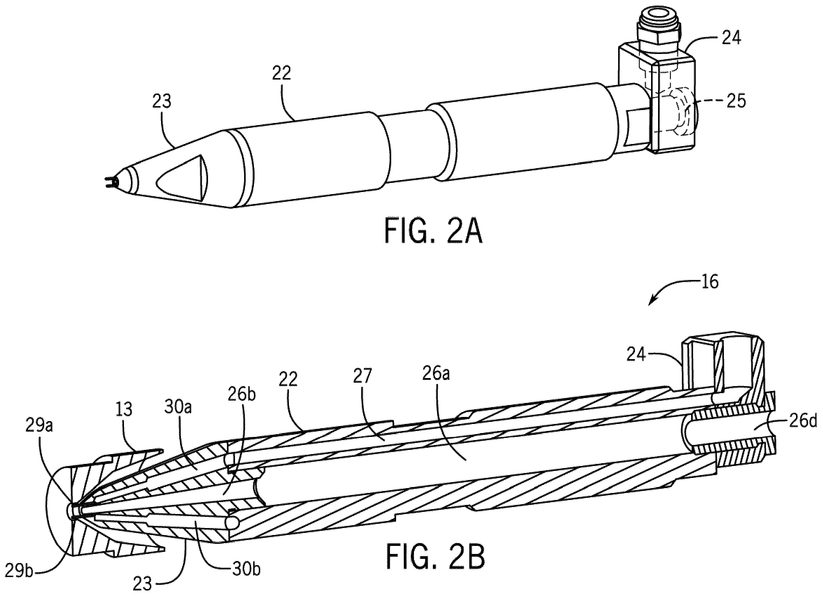

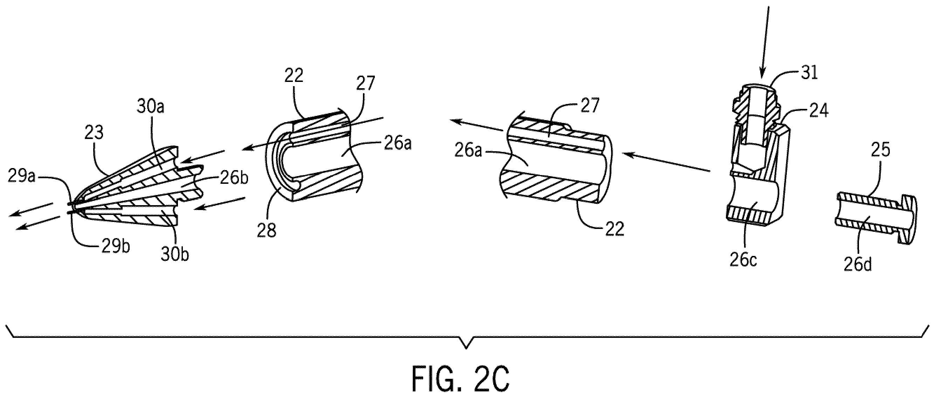

Figures 2A-2C illustrate one embodiment of the microcapillary mandrel assembly of this invention. Microcapillary mandrel assembly 16 comprises mandrel body 22, mandrel tip 23, mandrel adaptor 24, and mandrel adaptor retaining screw 25. Mandrel tip 23 and mandrel adaptor retaining screw 25 are attached to opposite ends of mandrel body 22 typically in a threaded relationship with a high temperature thread sealant between the opposing threads of the body and screw. Mandrel adaptor 24 is secured to mandrel body 22 by means of adaptor retaining screw 25.

Mandrel body 22 comprises wire channel 26a and fluid channel 27. Wire channel 26a is tubular and fluid channel 27 is annular, and fluid channel 27 circumscribes wire channel 26a. Both channels run the length of mandrel body 22. Fluid channel 27 provides fluid communication between mandrel adaptor 24 and mandrel tip 23, and fluid channel 27 terminates in fluid ring 28 located at the juncture of mandrel body 22 and mandrel tip 23.

Mandrel tip 23 is a cone with the narrow or tapered end equipped with nozzles 29a and 29b. These nozzles extend beyond the tapered end of mandrel tip 23. Mandrel tip 23 comprises fluid channels 30a and 30b, and these channels run the length of mandrel tip 23 and provide fluid communication between fluid ring 28 and nozzles 29a and 29b, respectively. Mandrel tip 23 is also comprises wire channel 26b that runs the length of mandrel tip 23 and is aligned with and is in open communication with wire channel 26a of mandrel body 22. Wire channel 26b is positioned along the center, longitudinal line of mandrel tip 23, and fluid channels 30a and 30b are positioned about wire channel 26b following the taper line of mandrel tip 23 beginning at fluid ring 28 and terminating at nozzles 29a and 29b, respectively. These nozzles are positioned about and beyond the tapered end of mandrel tip 23.

Mandrel adaptor 24 and mandrel adaptor retaining screw 25 comprise wire channel 26c and 26d, respectively. When assembled, wire channels 26a-26d are in alignment and in open communication with one another such that a wire can enter wire channel 26d and pass through wire channels 26a-26c in a straight line and without interruption. Mandrel adaptor 24 is also equipped with fluid port 31 which is in fluid communication with fluid channel 27 of mandrel body 22. Mandrel body 22 is also equipped with polymer melt port 32 which is in fluid communication with polymer melt channel 33 formed by the exterior surface of mandrel assembly 16 and the interior surfaces of mandrel body 22 and mandrel tip 23.

Wire coating apparatus 10 is operated in the same manner as known wire coating apparatus. Wire or previously coated wire, e.g., a wire comprising one or more wire coatings such as one or more semiconductor layer and/or insulation layers is fed into mandrel adaptor retaining screw wire channel 26d and drawn through wire channels 26a-c. The wire itself can comprise one or more strands, e.g., a single strand or a twisted pair of strands, of any conductive metal, e.g., copper or aluminum, or optic fiber.

Polymer melt is fed, typically under pressure, to mandrel body 22 through polymer melt port 32, and deflected into polymer melt channel 33 by resin flow deflector 20. Typically the wire coating apparatus is attached to the exit end of an extruder from which it receives the polymer melt. The polymer itself can be selected from any number of thermoplastic and thermoset materials, the specific material selected for its end-use performance. Exemplary materials include various functionalized and nonfunctionalized polyolefins such as polyethylene, polypropylene, ethylene vinyl acetate (EVA), and the like. The polymer melt flows through polymer melt channel 33 until it flows around nozzles 29a-b and is applied to the surface of the wire.

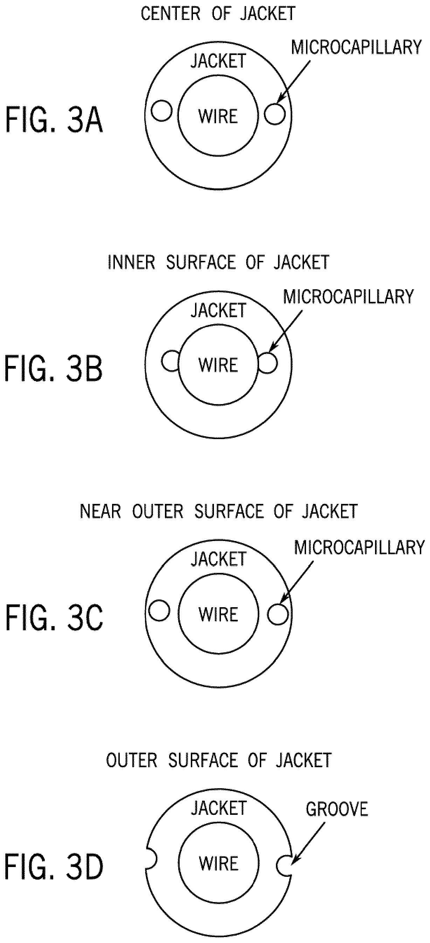

Fluid, typically air but any gas, liquid or melt can be used, enters, typically under pressure, fluid channel 27 through fluid port 31 of mandrel adaptor 24. The fluid moves through fluid channel 27 of mandrel body 22 into fluid ring 28 from which it enters fluid channels 30a-b of mandrel tip 23. The fluid exits channels 30a-b through nozzles 29a-b, respectively, into the polymer melt as the melt is applied to the wire. Because the nozzles extend beyond the end of the cone of mandrel tip 23, the fluid from nozzles 29a-b enters the wire covering and as the polymer melt solidifies, forms microcapillaries in the covering. The number of microcapillaries formed is a function of the number of nozzles extending beyond the end of the cone of the mandrel tip. Likewise, the placement of the microcapillaries in the wire covering is a function of the placement of the nozzles on the mandrel tip. Figures 3A-D illustrate four placement patterns in a cable jacket formed with a mandrel tip equipped with two nozzles. In each figure the microcapillaries are opposite one another, but in Figure 3A they are centered in the jacket wall, while in Figure 3B they are on the inner surface of the jacket wall, while in Figure 3C they are near the outer surface of the jacket wall, while in Figure 3D they are on the outer surface of the jacket wall (and thus actually form a groove in the outer surface of the jacket wall).

The placement of the nozzles such that they extend beyond the end of the cone of the mandrel tip allows for the formation of microcapillaries in the wall of the wire coating. This, in turn, allows for the extrusion of a single layer of wire coating with microcapillaries which, in turn, allows for the design of a die with a smaller diameter as compared to a die for extruding multiple layers with microcapillaries formed between the layers. This, in turn, can reduce both the capital and operating costs associated with extruding a coating about a wire.

The microcapillary geometry can be optimized to fit covering thickness and achieve desired ease of tearing with minimum impact on mechanical properties. The microcapillaries can be discontinuous or intermittent so to enable jacket tearing over a specific length. The microcapillaries can be placed at desired radial positions on the jacket circumference (as illustrated in Figures 3A-D). The microcapillaries can be marked for ease of finding by printing or indentation or embossing the exterior surface of the wire covering. The microcapillary can be also filled with a substantially weaker non-covering polymeric material, such as an elastomer, by using a secondary extruder to pump the polymer melt into microcapillary channels. The short axis of microcapillary should not exceed the thickness of the jacket or cable layer containing it. The microcapillary geometry is controlled by flow rate and pressure, e.g., air flow rate and air pressure.

The following example is a further illustration of an embodiment of this invention.

### EXAMPLE

The wire coating apparatus used in this example is described in Figures 1A-C and 2A-C. The resin flow deflector distributes the incoming polymer melt into uniform flow across the annular channel. Air is introduced to microcapillary mandrel through the mandrel adaptor, and it is transported to the mandrel tip via hollow channel. The air is divided into two streams, and then it arrives at the microcapillary nozzles. The polymer melt wraps around microcapillary nozzles and meets with air at the die exit.

The wire coating apparatus was a Davis-Standard wire coating line comprised of a single-screw extruder, a wire stranding unit, a microcapillary tubing type cross-head die, an airline for providing air flow to the microcapillary channels, a series of water bathes with temperature controllers, and a filament take-up device.

The polymer resin used is a medium density polyethylene (MDPE) compound (AXELERON^{™} GP 6548 BK CPD) with a density 0.944 g/cm³ and a melt flow rate of 0.7 g/10min (190°C, 2.16 kg). The temperature profile of the extrusion line is reported in Table 1. The air pressure was initially set to 20 pounds per square inch (psi) (137,896 Pascals) and air flow rate was set to 84.7 cc/min for starting up the extrusion. Using a conventional wire stranding unit, a 14 gauge (0.064 inch, 1.63 millimetre) copper wire was drawn through the microcapillary wire coating die. The wire was preheated to 225-250°F (107.2°C to 121.1 °C) before arriving at the die. Polymer pellets were fed into the extruder through a hopper, and then melted and pumped into the microcapillary cross-head die. The molten polymer flowed around microcapillary nozzles close to the die exit and was applied onto the surface of the copper wire. This coated wire was threaded through a series of water cooling troughs. The wire thus manufactured was collected on a filament take-up device. The air pressure and air flow rate were slowly regulated down so that that the extrusion coating process could be run in the steady state. For the inventive samples, the screw speed was changed from 18.5 revolutions per minute (rpm) to 45.75 rpm, and the line speed varied from 100 feet per minute (ft/min) to 300 ft/min (30.48 meters per minute (m/min) to 91.44 m/min). The air pressure was kept at 10 psi (68,948 Pascals), while the air flow rate varied from 15 cc/min to 23.1 cc/min.

For comparative samples, the air was shut off but the same extrusion conditions as inventive samples were kept.

**Table 1. Temperature Profile of Extrusion Line for Making Microcapillary Wire Coating**

| Zone #1 (°C) | Zone #2 (°C) | Zone #3 (°C) | Zone #4 (°C) | Zone #5 (°C) | Heat (°C) | Die 1 (°C) | Die 2 (°C) |
|---|---|---|---|---|---|---|---|
| 160 | 179 | 193 | 210 | 210 | 216 | 216 | 216 |

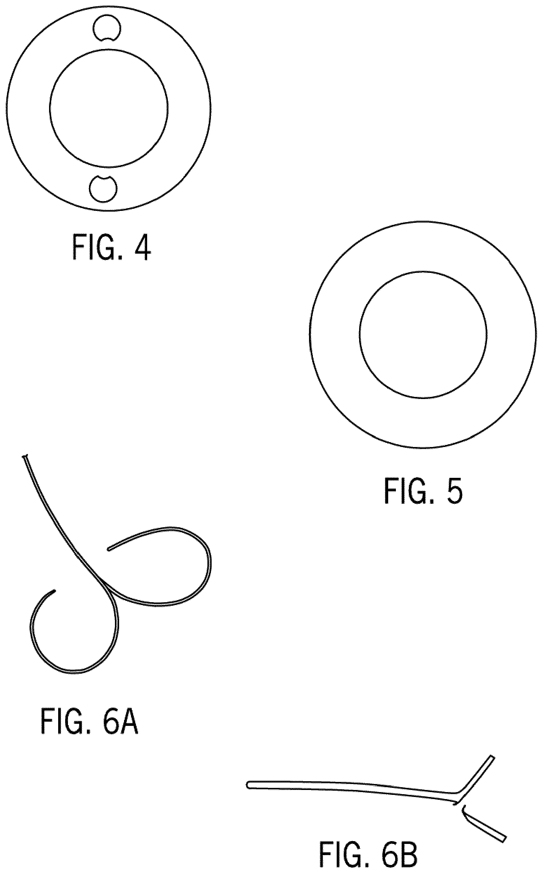

The detailed processing conditions and jacket and microcapillary dimension are given in Table 2. Figures 4 and 5 show examples of inventive microcapillary wire jacket, which was prepared by the conditions of a screw speed of 30.5 rpm, a line speed of 200 ft/min (60.96 m/min), an air pressure of 10 psi (68,948 Pascals) and air flow rate of 15 cc/min, and comparative wire jacket, which was prepared by the conditions of a screw speed of 30.5 rpm and a line speed of 200 ft/min (60.96 m/min).

The strip test was conducted to measure the tear strength of inventive microcapillary jackets and comparative solidjackets. The specimens were cut by 1.0 inch (2.56 cm) opening to make the lips. As reported in Table, Comparative 11A solid jacket has the highest strip force of 13.18 (pound-foot (lbf) (58.63 Newtons (N)), while Inventive 7A with two microcapillary channels shows the lowest strip force of 3.37 lbf (15 N). This represents 75% reduction in strip force for Inventive 7A as compared with Comparative 11A. Microcapillary channels in Inventive 9A guide the tearing path and result in clean stripping with lower force, as displayed in Figure 6A. In contrast, Comparative 11A solid jacket showed the breakage in a non-controlled fashion (Figure 6B). Also as shown from Table 2, there is a strong correlation between strip force and total microcapillary wall thickness. Smaller wall thickness results in lower strip force.

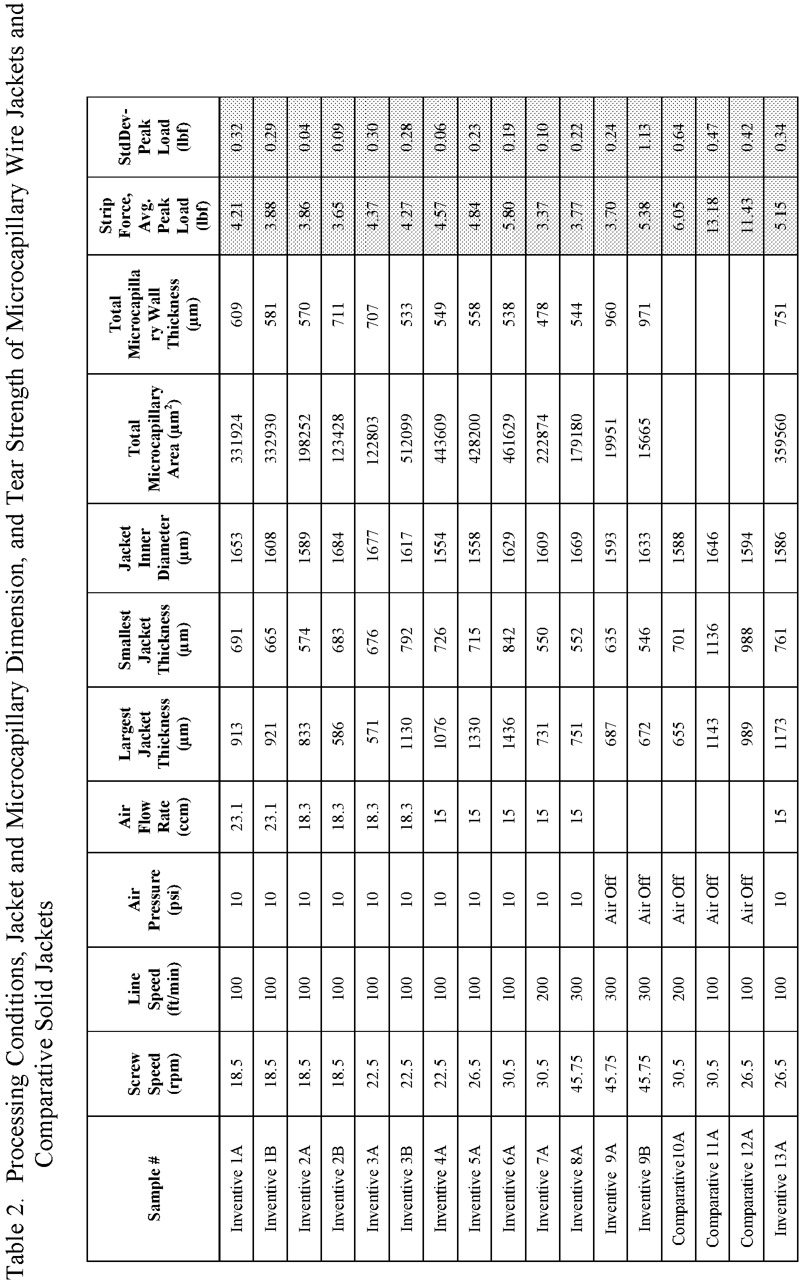

## Claims

1. A mandrel assembly (16) comprising:
(A) a housing (22) comprising:
(1) a housing wire tubular channel (26a) extending along (a) the length of the housing (22), and (b) the longitudinal centerline axis of the housing (22);
(2) a fluid annular channel (27) encircling the wire tubular channel (26a);
(3) a fluid ring (28) in fluid communication with the fluid annular channel (27), the fluid ring (28) positioned at one end of the housing (22); and
(B) a cone-shaped tip (23) having a wide end and a narrow end, the wide end of the tip (23) attached to the end of the housing (22) at which the fluid ring (28) is positioned, the tip (23) comprising:
(1) a tip wire tubular channel (26b) extending along (a) the length of the tip (23), and (b) the longitudinal centerline axis of the tip (23);
(2) a tip fluid channel (30a, 30b) in fluid communication with the fluid ring (28); and
(3) one or more nozzles (29a, 29b) in fluid communication with the tip fluid channel (30a, 30b), the nozzles (29a, 29b) located at the end and extending beyond the narrow end of the tip (23);
the housing wire tubular channel (26a) and the tip wire tubular channel (26b) in open communication with one another such that a wire, hybrid cable or optical fiber is passable from one to the other in a straight line and without interruption.

2. The mandrel assembly (16) of claim 1, wherein the one or more nozzles (29a, 29b) comprises two nozzles (29a, 29b), each located at the end and extending beyond the narrow end of the tip (23).

3. A die assembly for the extrusion of a polymeric product comprising microcapillary structures, the assembly comprising the mandrel assembly (16) of any preceding claim.

4. A wire coating apparatus (10) for applying a polymeric coating comprising microcapillary structures to a wire, hybrid cable or optic fiber, the apparatus comprising the die assembly of claim 3.

5. The wire coating apparatus (10) of claim 4, wherein the fluid annular channel (27) is connected to a source of gas under pressure.

6. The wire coating apparatus (10) of claim 5, wherein the gas is air.

## Patentansprüche

1. Eine Dornanordnung (16), die Folgendes beinhaltet:
(A) ein Gehäuse (22), das Folgendes beinhaltet:
(1) einen röhrenförmigen Gehäusedrahtkanal (26a), der sich entlang (a) der Länge des Gehäuses (22) und (b) der Längsmittellinienachse des Gehäuses (22) erstreckt;
(2) einen ringförmigen Fluidkanal (27), der den röhrenförmigen Drahtkanal (26a) umgibt;
(3) einen Fluidring (28) in Fluidkommunikation mit dem ringförmigen Fluidkanal (27), wobei der Fluidring (28) an einem Ende des Gehäuses (22) positioniert ist; und
(B) eine kegelförmige Spitze (23), die ein breites Ende und ein schmales Ende aufweist, wobei das breite Ende der Spitze (23) an dem Ende des Gehäuses (22) angebracht ist, an dem der Fluidring (28) positioniert ist, wobei die Spitze (23) Folgendes beinhaltet:
(1) einen röhrenförmigen Spitzendrahtkanal (26b), der sich entlang (a) der Länge der Spitze (23) und (b) der Längsmittellinienachse der Spitze (23) erstreckt;
(2) einen Spitzenfluidkanal (30a, 30b) in Fluidkommunikation mit dem Fluidring (28); und
(3) eine oder mehrere Düsen (29a, 29b) in Fluidkommunikation mit dem Spitzenfluidkanal (30a, 30b), wobei sich die Düsen (29a, 29b) an dem Ende befinden und sich über das schmale Ende der Spitze (23) hinaus erstrecken;
wobei der röhrenförmige Gehäusedrahtkanal (26a) und der röhrenförmige Spitzendrahtkanal (26b) in offener Kommunikation miteinander sind, sodass ein Draht, ein Hybridkabel oder eine Lichtleitfaser in einer geraden Linie und ohne Unterbrechung von dem einem in den anderen geführt werden kann.

2. Dornanordnung (16) gemäß Anspruch 1, wobei die eine oder die mehreren Düsen (29a, 29b) zwei Düsen (29a, 29b) beinhalten, die sich jeweils an dem Ende befinden und sich über das schmale Ende der Spitze (23) hinaus erstrecken.

3. Eine Matrizenanordnung für die Extrusion eines Polymerprodukts, das mikrokapillare Strukturen beinhaltet, wobei die Anordnung die Dornanordnung (16) gemäß einem der vorhergehenden Ansprüche beinhaltet.

4. Eine Drahtbeschichtungsvorrichtung (10) zum Auftragen einer Polymerbeschichtung, die mikrokapillare Strukturen beinhaltet, auf einen Draht, ein Hybridkabel oder eine Lichtleitfaser, wobei die Vorrichtung die Matrizenanordnung gemäß Anspruch 3 beinhaltet.

5. Drahtbeschichtungsvorrichtung (10) gemäß Anspruch 4, wobei der ringförmige Fluidkanal (27) mit einer Quelle von druckbeaufschlagtem Gas verbunden ist.

6. Drahtbeschichtungsvorrichtung (10) gemäß Anspruch 5, wobei das Gas Luft ist.

## Revendications

1. Un ensemble de mandrin (16) comprenant :
(A) un logement (22) comprenant :
(1) un canal tubulaire de fil (26a) de logement s'étendant le long (a) de la longueur du logement (22), et (b) de l'axe central longitudinal du logement (22) ;
(2) un canal annulaire de fluide (27) encerclant le canal tubulaire de fil (26a) ;
(3) un anneau de fluide (28) en communication fluidique avec le canal annulaire de fluide (27), l'anneau de fluide (28) étant positionné au niveau d'une extrémité du logement (22) ; et
(B) un embout de forme conique (23) ayant une extrémité large et une extrémité étroite, l'extrémité large de l'embout (23) étant fixée au niveau de l'extrémité du logement (22) au niveau de laquelle l'anneau de fluide (28) est positionné, l'embout (23) comprenant :
(1) un canal tubulaire de fil (26b) d'embout s'étendant le long (a) de la longueur de l'embout (23), et (b) de l'axe central longitudinal de l'embout (23) ;
(2) un canal de fluide (30a, 30b) d'embout en communication fluidique avec l'anneau de fluide (28) ; et
(3) une ou plusieurs buses (29a, 29b) en communication fluidique avec le canal de fluide (30a, 30b) d'embout, les buses (29a, 29b) étant situées au niveau de l'extrémité et s'étendant au-delà de l'extrémité étroite de l'embout (23) ;
le canal tubulaire de fil (26a) de logement et le canal tubulaire de fil (26b) d'embout étant en communication ouverte l'un avec l'autre de sorte qu'un fil, un câble hybride ou une fibre optique puisse passer de l'un à l'autre en ligne droite et sans interruption.

2. L'ensemble de mandrin (16) de la revendication 1, dans lequel les une ou plusieurs buses (29a, 29b) comprennent deux buses (29a, 29b), chacune étant située au niveau de l'extrémité et s'étendant au-delà de l'extrémité étroite de l'embout (23).

3. Un ensemble de filière pour l'extrusion d'un produit polymérique comprenant des structures microcapillaires, l'ensemble comprenant l'ensemble de mandrin (16) de n'importe quelle revendication précédente.

4. Un appareil d'enrobage de fil (10) pour appliquer un enrobage polymérique comprenant des structures microcapillaires sur un fil, un câble hybride ou une fibre optique, l'appareil comprenant l'ensemble de filière de la revendication 3.

5. L'appareil d'enrobage de fil (10) de la revendication 4, dans lequel le canal annulaire de fluide (27) est raccordé à une source de gaz sous pression.

6. L'appareil d'enrobage de fil (10) de la revendication 5, dans lequel le gaz est de l'air.
